(19) Europäisches Patentamt
European Patent Office
Office européen des brevets

(11) EP 4 790 073 A1

# (12) EUROPEAN PATENT APPLICATION

published in accordance with Art. 153(4) EPC

(43) Date of publication:
**12.08.2026 Bulletin 2026/33**

(21) Application number: **24874472.4**

(22) Date of filing: **18.09.2024**

(51) International Patent Classification (IPC):
***C08F 8/34*** *(2006.01)* ***H01M 4/38*** *(2006.01)*
***H01M 4/58*** *(2010.01)* ***H01M 4/60*** *(2006.01)*
***H01M 10/052*** *(2010.01)*

(52) Cooperative Patent Classification (CPC):
**C08F 8/34; H01M 4/38; H01M 4/58; H01M 4/60; H01M 10/052;** Y02E 60/10

(86) International application number:
**PCT/JP2024/033289**

(87) International publication number:
**WO 2025/074863 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.10.2023 JP 2023171279**

(71) Applicant: **ADEKA CORPORATION**
**Arakawa-ku**
**Tokyo**
**116-8554 (JP)**

(72) Inventors:
- **KAKIAGE, Kenji**
  **Tokyo 116-8554 (JP)**
- **YANO, Toru**
  **Tokyo 116-8554 (JP)**

(74) Representative: **Müller-Boré & Partner Patentanwälte PartG mbB**
**Friedenheimer Brücke 21**
**80639 München (DE)**

## (54) SULFUR-CONTAINING MATERIAL, SULFUR-CONTAINING BATTERY MATERIAL, ELECTRODE, AND BATTERY

(57) Provided is a sulfur-containing material including a sulfur-modified compound, wherein, in photoelectron spectrum analysis of an S1s orbital of the sulfur-containing material by hard X-ray photoelectron spectroscopy, a ratio (A/B) between a peak intensity area (A) of a peak corresponding to an S-S bond and a peak intensity area (B) of a peak corresponding to a C-S bond, the peaks being observed in waveform separation of a peak of the S1s orbital within a range of 2,460 eV or more and 2,475 eV or less, is 2.5 or more and 4.0 or less ($2.5 \leq A/B \leq 4.0$).

EP 4 790 073 A1

## Description

### Technical Field

This disclosure relates to a sulfur-containing material, a sulfur-containing battery material, an electrode, and a battery.

### Background Art

A battery is used for various applications. The characteristics of the battery depend on an electrode, a separator, an electrolyte, and the like serving as constituent members of the battery, and research and development have been actively made on the respective constituent members. In the electrode, an active material in an electrode layer is important as well as a binder, a current collector, and the like, and research and development have been actively made on the active material. For example, a sulfur-containing material is known as the active material (see, for example, Patent Documents 1 and 2).

### Citation List

### Patent Document

Patent Document 1: WO 2010/044437 A1
Patent Document 2: JP 2014-022123 A

### Summary of Invention

### Technical Problem

When a battery was produced by using the sulfur-containing material to be used in Patent Document 1 or the like, the battery had problems of a small discharge capacity and a poor cycle characteristic.

This disclosure has been made in view of the above-mentioned problems, and a primary object of this disclosure is to provide a sulfur-containing material having an increased discharge capacity and an excellent cycle characteristic. In this disclosure, the term "cycle characteristic" refers to such a characteristic that the charge and discharge capacity of a lithium ion secondary battery is maintained even when charge and discharge are repeatedly performed. Accordingly, a lithium ion secondary battery having a large degree of reduction in charge and discharge capacity and a low capacity retention rate along with repeated charge and discharge is poor in cycle characteristic. In contrast, a lithium ion secondary battery having a small degree of reduction in charge and discharge capacity and a high capacity retention rate is excellent in cycle characteristic.

### Solution to Problem

The inventors have made extensive investigations, and as a result, have found that the above-mentioned problems can be solved by a sulfur-containing material including a sulfur-modified compound, in which, in photoelectron spectrum analysis of an S1s orbital of the sulfur-containing material by hard X-ray photoelectron spectroscopy, a ratio (A/B) between a peak intensity area (A) of a peak corresponding to an S-S bond and a peak intensity area (B) of a peak corresponding to a C-S bond, the peaks being observed in waveform separation of a peak of the S1s orbital within a range of 2,460 eV or more and 2,475 eV or less, satisfies a predetermined condition.

That is, this disclosure is directed to a sulfur-containing material including a sulfur-modified compound, wherein, in photoelectron spectrum analysis of an S1s orbital of the sulfur-containing material by hard X-ray photoelectron spectroscopy, a ratio (A/B) between a peak intensity area (A) of a peak corresponding to an S-S bond and a peak intensity area (B) of a peak corresponding to a C-S bond, the peaks being observed in waveform separation of a peak of the S1s orbital within a range of 2,460 eV or more and 2,475 eV or less, is 2.5 or more and 4.0 or less ($2.5 \leq A/B \leq 4.0$).

It is preferred that, in the sulfur-containing material of this disclosure, the sulfur-modified compound be a sulfur-modified acrylic compound.

This disclosure is directed to a sulfur-containing battery material including a sulfur-modified compound, wherein, in photoelectron spectrum analysis of an S1s orbital of the sulfur-containing battery material by hard X-ray photoelectron spectroscopy, a ratio (A/B) between a peak intensity area (A) of a peak corresponding to an S-S bond and a peak intensity

area (B) of a peak corresponding to a C-S bond, the peaks being observed in waveform separation of a peak of the S1s orbital within a range of 2,460 eV or more and 2,475 eV or less, is 2.5 or more and 4.0 or less ($2.5 \leq A/B \leq 4.0$).

It is preferred that, in the sulfur-containing battery material of this disclosure, the sulfur-modified compound be a sulfur-modified acrylic compound.

This disclosure is directed to an electrode including an electrode layer containing the above-mentioned sulfur-containing material.

This disclosure is directed to a battery including the above-mentioned electrode.

It is preferred that, in the battery of this disclosure, the electrode be a positive electrode.

It is preferred that the battery of this disclosure include a negative electrode formed of lithium.

## Advantageous Effects of Invention

According to this disclosure, the sulfur-containing material having an increased discharge capacity and an excellent cycle characteristic can be provided.

## Brief Description of Drawings

FIG. 1 is a photoelectron spectrum of an S1s orbital of a sulfur-containing material A analyzed by hard X-ray photoelectron spectroscopy (HAXPES).

FIG. 2 is a photoelectron spectrum of an S1s orbital of a sulfur-containing material "a" analyzed by hard X-ray photoelectron spectroscopy (HAXPES).

## Description of Embodiments

A sulfur-containing material, a sulfur-containing battery material, an electrode, and a battery of this disclosure are described in detail.

### A. Sulfur-containing Material

First, the sulfur-containing material of this disclosure is described.

The sulfur-containing material of this disclosure includes a sulfur-modified compound, and is characterized in that, in photoelectron spectrum analysis of an S1s orbital of the sulfur-containing material by hard X-ray photoelectron spectroscopy, a ratio (A/B) between a peak intensity area (A) of a peak corresponding to an S-S bond observed in waveform separation of a peak of the S1s orbital within the range of 2,460 eV or more and 2,475 eV or less and a peak intensity area (B) of a peak corresponding to a C-S bond observed in the waveform separation of the peak of the S1s orbital within the range of 2,460 eV or more and 2,475 eV or less is 2.5 or more and 4.0 or less ($2.5 \leq A/B \leq 4.0$).

The sulfur-containing material of this disclosure has only to include at least the sulfur-modified compound, and may further include elemental sulfur and impurities.

In this disclosure, the elemental sulfur may be sulfur that does not form a stable interaction with the sulfur-modified compound. Specific examples of the elemental sulfur include, but not particularly limited to, $\alpha$-sulfur, $\beta$-sulfur, and $\gamma$-sulfur each having a $S_8$ structure.

According to this disclosure, when the sulfur-containing material is used for a battery, the discharge capacity of the battery is increased and the cycle characteristic thereof is improved.

#### 1. Analysis by Hard X-ray Photoelectron Spectroscopy (HAXPES)

The sulfur-containing material of this disclosure has a feature of including sulfur in a specific bonding state as determined in its analysis by hard X-ray photoelectron spectroscopy (HAXPES). The hard X-ray photoelectron spectroscopy is a method involving irradiating a solid sample with a hard X-ray to excite an electron corresponding to an energy level out of electrons in the solid sample, and measuring the kinetic energy of a photoelectron emitted from the solid sample into a vacuum, to thereby analyze chemical states of the solid sample (e.g., a constituent element of the solid sample and the electronic state or bonding state of the constituent element). A measurable depth in the HAXPES is typically 50 nm. In this disclosure, a hard X-ray refers to an X-ray having an energy of 5 keV or more.

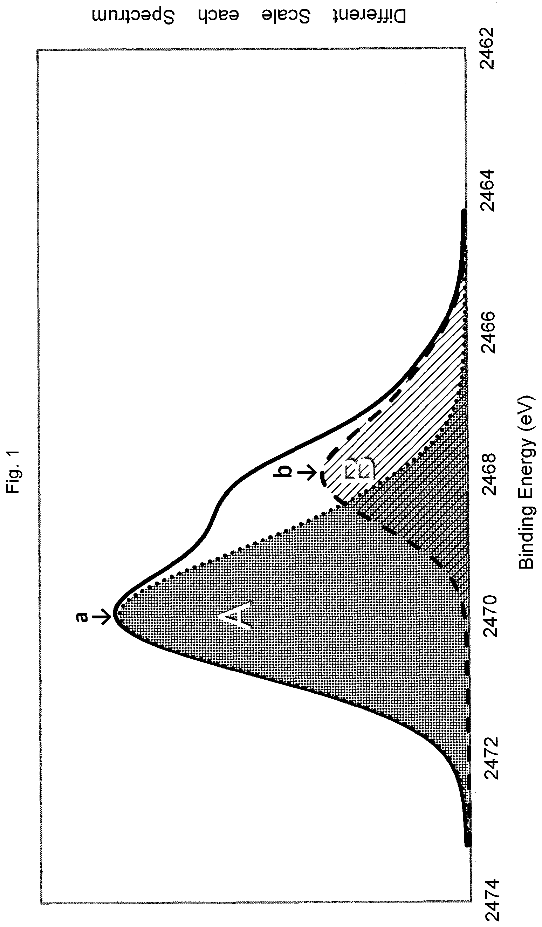

Specifically, the photoelectron spectrum of an S1s orbital (1s orbital of sulfur) obtained by the hard X-ray photoelectron spectroscopy analysis of the sulfur-containing material of this disclosure has, for example, a spectrum waveform indicated by the solid line in FIG. 1. In the photoelectron spectrum of the S1s orbital, a peak of the S1s orbital is

observed within the range of 2,460 eV or more and 2,475 eV or less. When the photoelectron spectrum of the S1s orbital is subjected to waveform separation analysis, a peak (e.g., a peak "a" of the dotted line in FIG. 1) corresponding to an S-S bond is observed on a high energy side within the range of 2,470.0 eV or more and 2,471.0 eV or less, and a peak (e.g., a peak "b" of the broken line in FIG. 1) corresponding to a C-S bond is observed on a low energy side within the range of 2,468.0 eV or more and 2,469.0 eV or less. Peak intensity areas of the peaks corresponding to the respective bonds are obtained to determine a ratio (A/B) between a peak intensity area (A) and a peak intensity area (B). In the sulfur-containing material of this disclosure, the ratio (A/B) between the peak intensity area (A) of the peak corresponding to an S-S bond, the peak being observed within the range of 2,470.0 eV or more and 2,471.0 eV or less and the peak intensity area (B) of the peak corresponding to a C-S bond, the peak being observed within the range of 2,468.0 eV or more and 2,469.0 eV or less, falls within the range of 2.5 or more and 4.0 or less ($2.5 \leq A/B \leq 4.0$). For example, in FIG. 1, the peak intensity area (a dotted region A in FIG. 1) of the peak corresponding to an S-S bond is 76.8%, the peak intensity area (a hatched region B in FIG. 1) of the peak corresponding to a C-S bond is 23.2%, and hence the ratio (A/B) between the peak intensity areas is 3.31.

The assignment of each of the peak corresponding to a C-S bond and the peak corresponding to an S-S bond in this this disclosure is made with reference to the article by Naoya Amino and one other, Applications of Hard X-ray Photoelectron Spectroscopy (HAXPES) to Rubber Materials Developments, Nippon Gomu Kyokaishi, Vol. 92, Issue 2 (2019) p. 76-81.

The peak intensity area of the peak corresponding to an S-S bond observed in the waveform separation of the peak of the S1s orbital within the range of 2,460 eV or more and 2,475 eV or less, at the surface of the sulfur-containing material, is assumed to correspond to a ratio of the bond contributing to the total sulfur content of the sulfur-containing material. Meanwhile, the peak intensity area of the peak corresponding to a C-S bond observed in the waveform separation of the peak of the S1s orbital within the range of 2,460 eV or more and 2,475 eV or less, at the surface of the sulfur-containing material, is assumed to correspond to a ratio of the bond contributing to the stability of the sulfur-containing material.

Accordingly, it is assumed that when the above-mentioned ratio (A/B) between the peak intensity areas is set to a defined value, the structural stability of the sulfur-containing material is secured, and a battery excellent in discharge capacity and cycle characteristic can be produced.

In this disclosure, the above-mentioned ratio (A/B) between the peak intensity areas is preferably 2.5 or more and 3.7 or less ($2.5 \leq A/B \leq 3.7$), more preferably 2.5 or more and 3.5 or less ($2.5 \leq A/B \leq 3.5$), still more preferably 2.6 or more and 3.5 or less ($2.6 \leq A/B \leq 3.5$) from the viewpoints of increasing the discharge capacity of a secondary battery and improving the cycle characteristic thereof.

## 2. Total Sulfur Content

In this disclosure, the term "total sulfur content" refers to the total content of sulfur atoms. The total sulfur content of the sulfur-containing material may be calculated from the results of analysis with a CHNS analyzer capable of analyzing sulfur and oxygen.

The total sulfur content of the sulfur-containing material of this disclosure is preferably from 30 mass% to 90 mass%, more preferably from 31 mass% to 85 mass%, still more preferably from 32 mass% to 80 mass%, still more preferably from 33 mass% to 75 mass%, still more preferably from 33 mass% to 70 mass%, still more preferably from 35 mass% to 70 mass%, still more preferably from 43 mass% to 65 mass%, most preferably from 43 mass% to 60 mass% from the viewpoint that the discharge capacity is further increased.

## 3. Average Particle Diameter

The average particle diameter of the sulfur-containing material of this disclosure is preferably 30 μm or less, more preferably 0.1 μm or more and 30 μm or less, still more preferably 0.5 μm or more and 25 μm or less, most preferably 1 μm or more and 20 μm or less from the viewpoint that the discharge capacity is further increased. In this disclosure, the term "average particle diameter" refers to a 50% particle diameter measured by a laser diffraction light scattering method. In the laser diffraction light scattering method, the particle diameter is a diameter on a volume basis, and a secondary particle diameter of a measurement object is measured. When the average particle diameter is measured by the laser diffraction light scattering method, the measurement object is dispersed in a dispersing medium such as water and then measured.

## 4. Sulfur-modified Compound

For example, a compound in which a sulfur atom and an atom in an organic compound are covalently bonded to each other may be used as the sulfur-modified compound to be used for the sulfur-containing material of this disclosure. A method of producing such sulfur-modified compound is, for example, a method including heating elemental sulfur and the organic compound.

Examples of the organic compound include an acrylic compound, a polyether compound, a pitch compound, a polynuclear aromatic compound, an aliphatic hydrocarbon compound, and a thienoacene compound.

That is, examples of the sulfur-modified compound include a sulfur-modified acrylic compound, a sulfur-modified polyether compound, a sulfur-modified pitch compound, a sulfur-modified polynuclear aromatic compound, a sulfur-modified aliphatic hydrocarbon compound, a polythienoacene compound, and carbon polysulfide.

In this disclosure, the sulfur-modified compound is preferably selected from the group consisting of: a sulfur-modified acrylic compound; a sulfur-modified polyether compound; and a sulfur-modified polynuclear aromatic compound, and is more preferably a sulfur-modified acrylic compound from the viewpoints of increasing the discharge capacity of the secondary battery and achieving an excellent cycle characteristic thereof.

The total sulfur content of the sulfur-modified compound is not particularly limited, but is preferably from 20 mass% to 80 mass%, more preferably from 25 mass% to 75 mass%, more preferably from 25 mass% to 70 mass%, more preferably from 30 mass% to 70 mass%, still more preferably 33 mass% to 70 mass%, still more preferably from 35 mass% to 70 mass%, still more preferably from 43 mass% to 65 mass%, most preferably from 43 mass% to 60 mass% from the viewpoint that the discharge capacity is further increased.

In this case, the total sulfur content of the sulfur-modified compound may be calculated from the results of analysis with a CHNS analyzer capable of analyzing sulfur and oxygen.

In this disclosure, the sulfur-modified compound is preferably incorporated at 70 parts by mass or more into 100 parts by mass of the sulfur-containing material, is more preferably incorporated at 75 parts by mass or more thereinto, is still more preferably incorporated at 80 parts by mass or more thereinto, is still more preferably 90 parts by mass or more thereinto, is still more preferably incorporated at 95 parts by mass or more thereinto, and is most preferably incorporated at 98 parts by mass or more thereinto from the viewpoint that the discharge capacity is increased.

In this disclosure, the content of the sulfur-modified compound may be measured by a known method. The content of the sulfur-modified compound may be measured by, for example, subjecting the sulfur-containing material to thermogravimetric analysis. In the thermogravimetric analysis, a change in weight of the sulfur-modified compound until a temperature reaches 350°C may be measured under such conditions that a heating start temperature is set to 100°C or less, and a temperature increase rate is set to a constant rate of 10°C/min, and the content (mass%) of the sulfur-modified compound in the sulfur-containing material may be calculated from the weight of a residual substance at the completion of the measurement by using the following formula.

Content (mass%) of sulfur-modified compound=100-{(weight of sulfur-containing material before start of heating-weight of residual substance at completion of measurement)/weight of sulfur-containing material before start of heating}×100

(1) Sulfur-modified Acrylic Compound

For example, a compound in which a sulfur atom and an atom in an acrylic compound are covalently bonded to each other may be used as the sulfur-modified acrylic compound to be used for the sulfur-containing material of this disclosure. A method of producing such sulfur-modified acrylic compound is, for example, a method including heating elemental sulfur and the acrylic compound.

In this disclosure, examples of the acrylic compound include a polyacrylonitrile-based compound and other acrylic compounds.

In this disclosure, examples of the sulfur-modified acrylic compound include a sulfur-modified polyacrylonitrile-based compound and other sulfur-modified acrylic compounds. The sulfur-modified acrylic compound is preferably a sulfur-modified polyacrylonitrile-based compound from the viewpoint that the discharge capacity is increased.

The total sulfur content of the sulfur-modified acrylic compound is not particularly limited, but is preferably from 20 mass% to 80 mass%, more preferably from 25 mass% to 75 mass%, more preferably from 25 mass% to 70 mass%, most preferably from 30 mass% to 70 mass% from the viewpoint that the discharge capacity is further increased. In this case, the total sulfur content of the sulfur-modified acrylic compound may be calculated from the results of analysis with a CHNS analyzer capable of analyzing sulfur and oxygen.

(1-1) Sulfur-modified Polyacrylonitrile-based Compound

For example, a compound in which a sulfur atom and an atom in a polyacrylonitrile-based compound are covalently bonded to each other may be used as the sulfur-modified polyacrylonitrile-based compound in this disclosure. A method of producing such sulfur-modified polyacrylonitrile-based compound is, for example, a method including heating elemental sulfur and the polyacrylonitrile-based compound. In addition, the sulfur-modified polyacrylonitrile-based compound in this disclosure may comprise a compound obtained by a method including heating particles each obtained by surrounding a hydrocarbon by an outer shell formed of the polyacrylonitrile-based compound, and the elemental sulfur.

The hydrocarbon to be surrounded may be a saturated or unsaturated aliphatic hydrocarbon having 3 to 8 carbon atoms.

In this disclosure, the polyacrylonitrile-based compound has only to be a compound containing a constituent unit derived from at least one of acrylonitrile or methacrylonitrile. The polyacrylonitrile-based compound preferably contains at least the constituent unit derived from acrylonitrile from the viewpoint that the discharge capacity is increased.

The content of the constituent units derived from acrylonitrile and methacrylonitrile in 100 parts by mass of the polyacrylonitrile-based compound is preferably 10 parts by mass or more, more preferably 30 parts by mass or more from the viewpoint that the discharge capacity is increased.

When the polyacrylonitrile-based compound contains the constituent unit derived from acrylonitrile, from the viewpoint that the discharge capacity is increased, the content of the constituent unit derived from acrylonitrile in 100 parts by mass of the polyacrylonitrile-based compound is preferably 10 parts by mass or more, more preferably 30 parts by mass or more, still more preferably 50 parts by mass or more, still more preferably 80 parts by mass or more, still more preferably 85 parts by mass or more, still more preferably 90 parts by mass or more, still more preferably 95 parts by mass or more, most preferably 100 parts by mass, that is, it is most preferred that the polyacrylonitrile-based compound be formed only of the constituent unit derived from acrylonitrile.

When the polyacrylonitrile-based compound contains the constituent unit derived from methacrylonitrile, from the viewpoint that the discharge capacity is increased, the content of the constituent unit derived from methacrylonitrile in 100 parts by mass of the polyacrylonitrile-based compound is preferably 10 parts by mass or more, more preferably 30 parts by mass or more, still more preferably 30 parts by mass or more and 95 parts by mass or less, still more preferably 30 parts by mass or more and 90 parts by mass or less, still more preferably 30 parts by mass or more and 85 parts by mass or less, most preferably 30 parts by mass or more and 80 parts by mass or less.

The polyacrylonitrile-based compound may contain a constituent unit derived from another monomer excluding acrylonitrile and methacrylonitrile. Examples of the other monomer include: acrylic monomers, such as a (meth)acrylate, a (meth)acrylic acid ester, (meth)acrylamide, ethylene glycol (meth)acrylate, 1,6-hexanediol (meth)acrylate, neopentyl glycol di(meth)acrylate, and glycerin di(meth)acrylate; and conjugated dienes, such as butadiene and isoprene. Those other monomers may be used in combination thereof.

Herein, the term "(meth)acrylate" refers to any one of "acrylate" and "methacrylate". The term "(meth)acryl" refers to any one of "acryl" and "methacryl".

When the sulfur-containing material of this disclosure includes the sulfur-modified polyacrylonitrile-based compound that is preferred as the sulfur-modified compound, the Raman spectrum of the sulfur-containing material of this disclosure has only to be a Raman spectrum in which the sulfur-containing material of this disclosure can exhibit desired effects, but is preferably a Raman spectrum in which a peak is present within the range of a Raman shift of 1,327 $cm^{-1} \pm 10\ cm^{-1}$ from the viewpoints of increasing the discharge capacity of the battery and achieving an excellent cycle characteristic thereof. From the viewpoint that the discharge capacity is increased, in addition to the peak within the range of 1,327 $cm^{-1} \pm 10\ cm^{-1}$ described above, the Raman spectrum of the sulfur-containing material preferably has a peak within at least one range selected from the range of 1,531 $cm^{-1} \pm 10\ cm^{-1}$, the range of 939 $cm^{-1} \pm 10\ cm^{-1}$, the range of 479 $cm^{-1} \pm 10\ cm^{-1}$, the range of 377 $cm^{-1} \pm 10\ cm^{-1}$, and the range of 318 $cm^{-1} \pm 10\ cm^{-1}$, more preferably has peaks within at least two ranges selected from the range of 1,531 $cm^{-1} \pm 10\ cm^{-1}$, the range of 939 $cm^{-1} \pm 10\ cm^{-1}$, the range of 479 $cm^{-1} \pm 10\ cm^{-1}$, the range of 377 $cm^{-1} \pm 10\ cm^{-1}$, and the range of 318 $cm^{-1} \pm 10\ cm^{-1}$, and still more preferably has peaks within all of the range of 1,531 $cm^{-1} \pm 10\ cm^{-1}$, the range of 939 $cm^{-1} \pm 10\ cm^{-1}$, the range of 479 $cm^{-1} \pm 10\ cm^{-1}$, the range of 377 $cm^{-1} \pm 10\ cm^{-1}$, and the range of 318 $cm^{-1} \pm 10\ cm^{-1}$.

From the viewpoint that the discharge capacity is increased, in the Raman spectrum of the sulfur-containing material of this disclosure, a ratio (A1/B1) between a peak intensity A1 within the range of 1,327 $cm^{-1} \pm 10\ cm^{-1}$ (difference between the maximum peak within the range of 1,327 $cm^{-1} \pm 10\ cm^{-1}$ and the minimum peak within the range of from 300 $cm^{-1}$ to 1,800 $cm^{-1}$) and a peak intensity B1 within the range of 1,531 $cm^{-1} \pm 10\ cm^{-1}$ (difference between the maximum peak within the range of 1,531 $cm^{-1} \pm 10\ cm^{-1}$ and the minimum peak within the range of from 300 $cm^{-1}$ to 1,800 $cm^{-1}$) is preferably from 0.30 to 5.0, more preferably from 0.50 to 4.5, still more preferably from 0.70 to 4.0, most preferably from 0.80 to 3.5.

The Raman spectrum described above may be measured with NRS-3100 manufactured by JASCO Corporation (excitation wavelength: $\lambda$=532 nm, grating: 600 l/mm, resolution: 1 $cm^{-1}$, exposure time: 30 seconds, slit width: $\varphi$50 $\mu$m).

(1-2) Other Sulfur-modified Acrylic Compound

The other sulfur-modified acrylic compound in this disclosure is obtained by, for example, a method including heating elemental sulfur and a homopolymer or copolymer of any other acrylic monomer free of a constituent unit derived from acrylonitrile or methacrylonitrile. The same monomer as that described as the other acrylic monomer in the section "(1-1) Sulfur-modified Polyacrylonitrile-based Compound" may be used as the other acrylic monomer.

(2) Sulfur-modified Polynuclear Aromatic Compound

For example, a compound in which a sulfur atom and an atom in a polynuclear aromatic compound are covalently bonded to each other may be used as the sulfur-modified polynuclear aromatic compound. The sulfur-modified polynuclear aromatic compound may be produced by, for example, heating a mixture of elemental sulfur and a polynuclear aromatic compound serving as an organic compound. Examples of the polynuclear aromatic compound include: a benzene-based aromatic compound, such as naphthalene, anthracene, tetracene, pentacene, phenanthrene, chrysene, picene, pyrene, benzopyrene, perylene, or coronene; an aromatic compound in which part of the benzene-based aromatic compound is a five-membered ring; and a heteroatom-containing heteroaromatic compound in which part of carbon atoms of the aromatic compound are each substituted with sulfur, oxygen, or nitrogen. Further, those polynuclear aromatic compounds may each have a substituent, such as a chain or branched alkyl group having 1 or more and 12 or less carbon atoms, an alkoxyl group, a hydroxyl group, a carboxyl group, an amino group, an aminocarbonyl group, an aminothio group, a mercaptothiocarbonylamino group, or a carboxyalkylcarbonyl group.

(3) Sulfur-modified Polyether Compound

The same compound as that described in JP 2022-65974 A may be used as the sulfur-modified polyether compound.

5. Method of producing Sulfur-containing Material

In this disclosure, a method of producing the sulfur-containing material is not particularly limited as long as the method can provide a material including a sulfur-modified compound, in which, in photoelectron spectrum analysis of an S1s orbital of the material by hard X-ray photoelectron spectroscopy, a ratio (A/B) between the peak intensity area (A) of the peak corresponding to an S-S bond, the peak being observed in waveform separation of a peak of the S1s orbital within the range of 2,460 eV or more and 2,475 eV or less, and the peak intensity area (B) of the peak corresponding to a C-S bond, the peak being observed in the waveform separation of the peak of the S1s orbital within the range of 2,460 eV or more and 2,475 eV or less, satisfies the relationship of 2.5 or more and 4.0 or less ($2.5 \leq A/B \leq 4.0$). However, an example of the method of producing the sulfur-containing material is a method including a heating step of heating a mixture of elemental sulfur and an organic compound.

The production method may be a method including a mechanochemical treatment step of subjecting the heat-treated product after the heating step to mechanochemical treatment.

The ratio (A/B) between the peak intensity area (A) of the peak corresponding to an S-S bond and the peak intensity area (B) of the peak corresponding to a C-S bond may be adjusted by a heating temperature and a heating time in the heating step of heating a mixture of elemental sulfur and an organic compound.

The mechanochemical treatment in the mechanochemical treatment step refers to treatment of causing a chemical reaction, which utilizes high energy locally generated by mechanical energy, such as friction or compression energy, in a pulverization process of a solid substance.

In the mechanochemical treatment, for example, mechanical energy, such as impact, friction, compression, or shear energy, may be caused to act on the heat-treated product, or a combination thereof may be caused to act thereon. A known apparatus may be used as an apparatus for performing the mechanochemical treatment, and examples thereof include: a mixing apparatus, such as a ball mill, a vibration mill, a planetary ball mill, a cyclone mill, or a medium stirring-type mill; a pulverizer, such as a ball medium mill, a roller mill, or a mortar; and a jet pulverizer capable of mainly causing a force, such as an impact or grinding force, to act on the heat-treated product.

In this disclosure, the apparatus is preferably a mixing apparatus, such as a ball mill, a vibration mill, a planetary ball mill, a cyclone mill, or a medium stirring-type mill, or a pulverizer, such as a ball medium mill, a roller mill, or a mortar, more preferably a mixing apparatus, such as a ball mill, a vibration mill, a planetary ball mill, or a medium stirring-type mill, still more preferably a ball mill, a vibration mill, a planetary ball mill, or a cyclone mill from the viewpoint that the discharge capacity is further increased.

An environment for performing the mechanochemical treatment may be under an oxidizing atmosphere or under a non-oxidizing atmosphere, but is preferably under a non-oxidizing atmosphere. The oxidizing atmosphere refers to an atmosphere containing an oxidizing gas, and is, for example, an atmosphere containing oxygen, ozone, or nitrogen dioxide. The non-oxidizing atmosphere refers to an atmosphere free of an oxidizing gas, and is, for example, an atmosphere formed of nitrogen or argon.

In this disclosure, the environment for performing the mechanochemical treatment is preferably under a non-oxidizing atmosphere formed of nitrogen or argon, more preferably under a non-oxidizing atmosphere formed of nitrogen from the viewpoint that the discharge capacity is increased.

The production method may be a method including any other step except the heating step and the mechan-

ochemical treatment step. An example of the other step may be a sulfur content adjustment step of adjusting an elemental sulfur content of the heat-treated product obtained in the heating step, which is performed between the heating step and the mechanochemical treatment step.

In the sulfur content adjustment step, the elemental sulfur may be additionally supplied to the heat-treated product to increase the total sulfur content of the heat-treated product to be used in the mechanochemical treatment step, or the elemental sulfur may be removed from the heat-treated product so that the content of the elemental sulfur in the heat-treated product to be used in the mechanochemical treatment step may be reduced.

B. Sulfur-containing Battery Material

Next, a sulfur-containing battery material of this disclosure is described.

The sulfur-containing battery material of this disclosure includes a sulfur-modified compound, and is characterized in that, in photoelectron spectrum analysis of an S1s orbital of the sulfur-containing battery material by hard X-ray photoelectron spectroscopy, a ratio (A/B) between the peak intensity area (A) of the peak corresponding to an S-S bond, the peak being observed in waveform separation of a peak of the S1s orbital within the range of 2,460 eV or more and 2,475 eV or less, and the peak intensity area (B) of the peak corresponding to a C-S bond, the peak being observed in the waveform separation of the peak of the S1s orbital within the range of 2,460 eV or more and 2,475 eV or less, is 2.5 or more and 4.0 or less ($2.5 \leq A/B \leq 4.0$).

When the sulfur-containing battery material of this disclosure is used for a battery, the discharge capacity of the battery can be increased and the cycle characteristic thereof can be improved.

The descriptions regarding the sulfur-modified compound included in the sulfur-containing battery material of this disclosure, the total sulfur content of the sulfur-containing battery material of this disclosure, and the ratio between the peak intensity areas of the peaks corresponding to the respective bonds, the peaks being observed in the waveform separation of the peak of the S1s orbital of the sulfur-containing battery material of this disclosure are the same as those described in the above-mentioned section "A. Sulfur-containing material," and hence descriptions thereof in this section are omitted.

An application of the sulfur-containing battery material of this disclosure is not particularly limited, but the material may be used for an electrode layer of an electrode in a battery, and is particularly useful as an active material for the electrode layer.

When the sulfur-containing battery material of this disclosure is the active material for the electrode layer in the battery, from the viewpoint that the discharge capacity is increased, the sulfur-containing battery material is preferably an active material in an electrode layer to be used for a secondary battery, more preferably an active material in a positive electrode active material layer, that is, a positive electrode active material to be used for a secondary battery.

The battery and the electrode layer in this disclosure are described in the following sections "C. Electrode" and "D. Battery."

C. Electrode

The electrode in this disclosure includes an electrode layer including the sulfur-containing material described in the above-mentioned section "A. Sulfur-containing Material" or the sulfur-containing battery material described in the above-mentioned section "B. Sulfur-containing Battery Material."

When the electrode of this disclosure is used for a battery, the discharge capacity of the battery can be increased and the cycle characteristic thereof can be improved.

1. Electrode Layer

In this disclosure, the term "electrode layer" refers to an electrode layer containing the sulfur-containing material or the sulfur-containing battery material. In addition, herein, when the electrode is a positive electrode, the electrode layer is sometimes referred to as "positive electrode active material layer," and when the electrode is a negative electrode, the electrode layer is sometimes referred to as "negative electrode active material layer." The thickness of the electrode layer may be generally from 1 $\mu$m to 1,000 $\mu$m.

In this disclosure, the content of the sulfur-containing material or the sulfur-containing battery material in 100 parts by mass of the electrode layer is preferably from 75 parts by mass to 99.5 parts by mass, more preferably from 80 parts by mass to 99 parts by mass, still more preferably from 85 parts by mass to 98 parts by mass from the viewpoints that the materials can effectively function as active materials and that the discharge capacity can be increased.

The electrode layer contains the sulfur-containing material or the sulfur-containing battery material, and may contain any other component as required.

When the electrode layer is used as the positive electrode active material layer or the negative electrode active

material layer, examples of the other component include a binder and a conductive assistant, and an active material except the sulfur-containing material and the sulfur-containing battery material, a viscosity modifier, a reinforcing material, an antioxidant, or the like may be incorporated as required.

A binder known as a binder for an electrode layer may be used as the binder. Examples of the binder include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylene-propylene-diene rubber, a fluororubber, a styrene-acrylic acid ester copolymer, an ethylene-vinyl alcohol copolymer, an acrylonitrile butadiene rubber, a styrene-isoprene rubber, polymethyl methacrylate, polyacrylate, polyvinyl alcohol, polyvinyl ether, carboxymethyl cellulose, sodium carboxymethyl cellulose, methyl cellulose, a cellulose nanofiber, polyethylene oxide, starch, polyvinylpyrrolidone, polyvinyl chloride, and polyacrylic acid. The binders may be used alone or in combination thereof. Of those, an aqueous binder is preferred, and a styrene-butadiene rubber, sodium carboxymethyl cellulose, and polyacrylic acid are each more preferred from the viewpoints of its low environmental load and excellent binding property.

The content of the binder in the electrode layer is preferably from 0.1 part by mass to 30 parts by mass, more preferably from 1 part by mass to 20 parts by mass with respect to 100 parts by mass of the sulfur-containing material or the sulfur-containing battery material in the electrode layer from the viewpoint that the discharge capacity is further increased.

A conductive assistant known as a conductive assistant for an electrode layer may be used as the conductive assistant. Examples of the conductive assistant include: carbon materials, such as natural graphite, artificial graphite, carbon black, ketjen black, acetylene black, channel black, furnace black, lamp black, thermal black, a carbon nanotube, a vapor grown carbon fiber (VGCF), graphene, fullerene, and needle coke; metal powders, such as aluminum powder, nickel powder, and titanium powder; conductive metal oxides, such as zinc oxide and titanium oxide; and sulfides, such as $La_2S_3$, $Sm_2S_3$, $Ce_2S_3$, and $TiS_2$. The conductive assistants may be used alone or in combination thereof.

The average particle diameter of the conductive assistant is preferably from 0.01 $\mu$m to 100 $\mu$m, more preferably from 0.01 $\mu$m to 50 $\mu$m from the viewpoint that the discharge capacity is increased. In this disclosure, the term "average particle diameter" refers to a 50% particle diameter measured by a laser diffraction light scattering method. In the laser diffraction light scattering method, the particle diameter is a diameter on a volume basis, and a secondary particle diameter of a measurement object is measured. When the average particle diameter is measured by the laser diffraction light scattering method, the measurement object is dispersed in a dispersing medium such as water and then measured.

The content of the conductive assistant in the electrode layer is preferably from 0.1 part by mass to 50 parts by mass, more preferably from 0.5 part by mass to 20 parts by mass, still more preferably from 1.0 part by mass to 10 parts by mass, most preferably from 2.0 parts by mass to 8.0 parts by mass with respect to 100 parts by mass of the sulfur-containing material or the sulfur-containing battery material in the electrode layer from the viewpoint that the discharge capacity is increased.

Materials known as active materials, such as a positive electrode active material and a negative electrode active material described in the section "D. Battery" to be described later, may each be used as the active material except the sulfur-containing material and the sulfur-containing battery material (hereinafter sometimes referred to as "other active material").

A viscosity modifier known as a viscosity modifier for an electrode layer may be used as the viscosity modifier. Examples of the viscosity modifier include: a cellulose-based polymer, such as carboxymethyl cellulose, methyl cellulose, or hydroxypropyl cellulose, and an ammonium salt and alkali metal salt thereof; (modified) poly(meth)acrylic acid, and an ammonium salt and alkali metal salt thereof; polyvinyl alcohols, such as (modified) polyvinyl alcohol, a copolymer of acrylic acid or an acrylic acid salt and vinyl alcohol, and a copolymer of maleic anhydride or maleic acid or fumaric acid and vinyl alcohol; polyethylene glycol, polyethylene oxide, polyvinylpyrrolidone, modified polyacrylic acid, oxidized starch, phosphorylated starch, casein, various modified starches, a cellulose nanofiber, and a hydrogenated acrylonitrile-butadiene copolymer. Those viscosity modifiers may each also be used as a dispersant.

A reinforcing material known as a reinforcing material for an electrode layer may be used as the reinforcing material. Examples of the reinforcing material include various inorganic and organic fillers each having a spherical, plate-like, rod-like, or fibrous shape.

An antioxidant known as an antioxidant for an electrode layer may be used as the antioxidant. Examples of the antioxidant include a phenol compound, a hydroquinone compound, an organic phosphorus compound, a sulfur compound, a phenylenediamine compound, and a polymer-type phenol compound.

A method of forming the electrode layer has only to be a method capable of forming the electrode layer, and an example thereof is a method including applying a composition for forming an electrode layer containing the sulfur-containing material or the sulfur-containing battery material, any other component to be incorporated as required, and a solvent, and then removing the solvent from the coating film by drying.

Examples of the solvent include propylene carbonate, ethylene carbonate, diethyl carbonate, dimethyl carbonate, ethylmethyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylamino-

propylamine, polyethylene oxide, tetrahydrofuran, dimethyl sulfoxide, sulfolane, $\gamma$-butyrolactone, water, and an alcohol. The usage amount of the solvent may be adjusted in accordance with an application method. For example, in the case of a doctor blade method, the usage amount of the solvent is preferably from 20 parts by mass to 300 parts by mass, more preferably from 30 parts by mass to 200 parts by mass with respect to 100 parts by mass of the total amount of the sulfur-containing material or the sulfur-containing battery material, the binder, and the conductive assistant from the viewpoint that the production is easy.

A method of preparing the composition for forming an electrode layer is not particularly limited, but an example thereof may be a method including mixing the sulfur-containing material or the sulfur-containing battery material, any other component to be incorporated as required, and a solvent by using, for example, an ordinary device, such as a ball mill, a sand mill, a bead mill, a pigment dispersing machine, a mortar machine, an ultrasonic dispersing machine, a homogenizer, a rotation/revolution mixer, a planetary mixer, FILMIX, a disperser, or JET PASTER.

An application method is not particularly limited, and various methods, such as a die coater method, a comma coater method, a curtain coater method, a spray coater method, a gravure coater method, a flexo coater method, a knife coater method, a doctor blade method, a reverse roll method, a brush coating method, and a dip method, may each be used. Of those, a die coater method, a doctor blade method, a knife coater method, or a comma coater method is preferred from the viewpoint that a satisfactory surface state of the coating film can be achieved in accordance with the physical properties such as viscosity of the composition for forming an electrode layer and the drying property thereof.

A drying removal method is not particularly limited, and heating, decompression, and a method including a combination thereof may each be used. A heating temperature may be set to from 40°C to 200°C. A heating furnace, an infrared heating furnace, a vacuum oven, or the like may be used as an apparatus for the heating or the decompression.

The drying volatilizes a volatile component such as the solvent to form the electrode layer. After that, the electrode layer may be subjected to press processing as required. A method for the press processing is, for example, a mold press method or a roll press method.

2. Electrode

The electrode of this disclosure includes the electrode layer, and may have any other configuration as required. An example of the other configuration is a current collector.

A conductive material, such as titanium, a titanium alloy, aluminum, an aluminum alloy, copper, nickel, stainless steel, nickel-plated steel, or a conductive resin, is used as the current collector. The surfaces of those conductive materials may each be coated with carbon. The current collector has a foil shape, a sheet shape, a mesh shape, a porous shape, or the like. Of those options, aluminum is preferred, and aluminum foil is more preferred from the viewpoints of conductivity and cost. When the current collector has a foil shape, its thickness is preferably from 1 $\mu$m to 100 $\mu$m from the viewpoints that the discharge capacity is further increased and that the production is easy.

The application of the electrode of this disclosure is not particularly limited, but an example thereof may be a battery. Examples of the battery include a primary battery and a secondary battery. Examples of the secondary battery include a lithium ion secondary battery, a sodium ion secondary battery, a potassium ion secondary battery, a magnesium ion secondary battery, a calcium ion secondary battery, and an aluminum ion secondary battery. That is, a lithium sulfur secondary battery, a sodium sulfur secondary battery, a potassium sulfur secondary battery, a magnesium sulfur secondary battery, a calcium sulfur secondary battery, and an aluminum sulfur secondary battery may also be adopted.

The application of the electrode of this disclosure is preferably an electrode of a secondary battery, more preferably an electrode of a lithium ion secondary battery from the viewpoint of practicability. The electrode of this disclosure may be used as any one of a positive electrode and a negative electrode, but is preferably used as the positive electrode from the viewpoints that the discharge capacity is further increased and that the production can be easily performed.

When the electrode is used as the electrode of the lithium ion secondary battery, predoping treatment of inserting lithium may be performed in advance. A lithium predoping method has only to follow a known method, and examples thereof include: an electrolysis doping method in which a half cell is assembled by using metal lithium as a counter electrode, and the electrode is electrochemically doped with lithium; and a diffusion doping method in which metal lithium foil is bonded to an electrode, and then the electrode is left in a liquid electrolyte and doped with lithium through utilization of diffusion of lithium into the electrode.

In addition, when the electrode is used as the electrode of the sodium ion secondary battery, predoping treatment of inserting sodium may be performed in advance. A sodium predoping method has only to follow a known method, and for example, the above-mentioned doping methods may each be used.

In this disclosure, the electrode may be subjected to press processing as required. A method for the press processing is, for example, a mold press method or a roll press method.

D. Battery

1. Electrode

The battery of this disclosure includes the electrode described in the above-mentioned section "C. Electrode," and may have any other configuration as required.
The battery of this disclosure has a large discharge capacity and an excellent cycle characteristic.

2. Other Configuration

Examples of the other configuration include a counter electrode to be used in combination with the above-mentioned electrode, an electrolyte, and a separator.

(1) Counter Electrode

The counter electrode is an electrode to be used in combination with the above-mentioned electrode. When the above-mentioned electrode is a positive electrode, the counter electrode is a negative electrode. When the above-mentioned electrode is a negative electrode, the counter electrode is a positive electrode.
The positive electrode and the negative electrode, each of which is used as the counter electrode for the above-mentioned electrode, are described below.

(1-1) Negative Electrode

A negative electrode including a negative electrode active material layer may be used as the negative electrode to be used as the counter electrode.
A negative electrode active material layer containing at least a known active material (hereinafter sometimes referred to as "negative electrode active material") may be used as the negative electrode active material layer.
In the case of the lithium ion secondary battery, examples of the negative electrode active material include natural graphite, artificial graphite, non-graphitizable carbon, graphitizable carbon, lithium, a lithium alloy, silicon, a silicon alloy, silicon oxide, silicon carbide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as $LiVO_2$, $Li_2VO_4$, and $Li_4Ti_5O_{12}$. The negative electrode active materials may be used alone or in combination thereof.
In the case of the sodium ion secondary battery, the negative electrode active material free of a lithium atom or the negative electrode active material in which a lithium atom is replaced with a sodium atom among the above-mentioned negative electrode active materials to be used in the lithium ion secondary battery may be used. When the negative electrode active material is lithium or a lithium alloy, or sodium or a sodium alloy, the negative electrode active material in itself may be used as an electrode without use of the current collector. In addition, potassium, magnesium, calcium, aluminum, zinc, or the like may be used as the other negative electrode active material.
The negative electrode active material layer contains the negative electrode active material, and may contain, for example, a binder or a conductive assistant as required.
The same binder and conductive assistant as those described in the above-mentioned section "C. Electrode" may be used as the binder and the conductive assistant to be used in the negative electrode active material layer, and hence descriptions thereof in this section are omitted.

(1-2) Positive Electrode

A positive electrode including a positive electrode active material layer may be used as the positive electrode to be used as the counter electrode.
A positive electrode active material layer containing at least a known active material (hereinafter sometimes referred to as "positive electrode active material") may be used as the positive electrode active material layer.
Examples of the positive electrode active material include a composite oxide of lithium and a transition metal, a lithium-containing transition metal phosphate compound, and a lithium-containing silicate compound. The positive electrode active materials may be used alone or in combination thereof.
A transition metal in the composite oxide of lithium and a transition metal is, for example, vanadium, titanium, chromium, manganese, iron, cobalt, nickel, or copper. Specific examples of the composite oxide of lithium and a transition metal include: composite oxides of lithium and cobalt such as $LiCoO_2$; composite oxides of lithium and nickel such as $LiNiO_2$; composite oxides of lithium and manganese, such as $LiMnO_2$, $LiMn_2O_4$, and $Li_2MnO_3$; and the composite oxides of lithium and transition metals whose primary transition metal atoms are partially substituted with other metals, such as aluminum, titanium, vanadium, chromium, manganese, iron, cobalt, lithium, nickel, copper, zinc, magnesium, gallium, and

zirconium. Specific examples of the composite oxides of lithium and transition metals whose primary transition metal atoms are partially substituted with other metals include $Li_{1.1}Mn_{1.8}Mg_{0.1}O_4$, $Li_{1.1}Mn_{1.85}Al_{0.05}O_4$, $LiNi_{0.5}Co_{0.2}Mn_{0.3}O_2$, $LiNi_{0.8}Co_{0.1}Mn_{0.1}O_2$, $LiNi_{0.5}Mn_{0.5}O_2$, $LiNi_{0.80}Co_{0.17}Al_{0.03}O_2$, $LiNi_{0.80}Co_{0.15}Al_{0.05}O_2$, $Li(Ni_{1/3}Co_{1/3}Mn_{1/3})O_2$, $LiNi_{0.6}Co_{0.2}Mn_{0.2}O_2$, $LiMn_{1.8}Al_{0.2}O_4$, $LiNi_{0.5}Mn_{1.5}O_4$, and $Li_2MnO_3$-$LiMO_2$ (M=Co, Ni, or Mn).

A transition metal in the lithium-containing transition metal phosphate compound is, for example, vanadium, titanium, manganese, iron, cobalt, or nickel. Specific examples of the lithium-containing transition metal phosphate compound include: iron phosphate compounds, such as $LiFePO_4$ and $LiMn_xFe_{1-x}PO_4$ ($0<x<1$); iron sulfate compounds such as $LiFeSO_4F$, cobalt phosphate compounds such as $LiCoPO_4$; the lithium-containing transition metal phosphate compounds whose primary transition metal atoms are partially substituted with other metals, such as aluminum, titanium, vanadium, chromium, manganese, iron, cobalt, lithium, nickel, copper, zinc, magnesium, gallium, zirconium, and niobium; and vanadium phosphate compounds such as $Li_3V_2(PO_4)_3$.

An example of the lithium-containing silicate compound is $Li_2FeSiO_4$.

The positive electrode active material layer contains the known active material described above, and may contain, for example, a binder or a conductive assistant as required.

The same binder and conductive assistant as those described in the above-mentioned section "C. Electrode" may be used as the binder and the conductive assistant to be used in the positive electrode active material layer, and hence descriptions thereof in this section are omitted.

(2) Electrolyte

The electrolyte is not particularly limited, and a known electrolyte may be used. Examples of the electrolyte include: a liquid electrolyte obtained by dissolving a supporting electrolyte in an organic solvent; a gel polymer electrolyte in which a supporting electrolyte is dissolved in an organic solvent and gelation is performed with a polymer; a polymer electrolyte which is free of an organic solvent and in which a supporting electrolyte is dispersed in a polymer; and an inorganic solid electrolyte. In addition, the electrolytes may be used in combination thereof.

In this disclosure, the electrolyte is preferably a liquid electrolyte, a polymer electrolyte, or an inorganic solid electrolyte, more preferably a liquid electrolyte from the viewpoints that the discharge capacity is further increased and that the production is easy.

In this disclosure, in the case of the lithium ion secondary battery, a hitherto known lithium salt is used as the supporting electrolyte to be used in each of the liquid electrolyte and the gel polymer electrolyte. Examples of the supporting electrolyte include $LiPF_6$, $LiBF_4$, $LiAsF_6$, $LiCF_3SO_3$, $LiCF_3CO_2$, $LiN(CF_3SO_2)_2$, $LiN(C_2F_5SO_2)_2$, $LiN(SO_2F)_2$, $LiC(CF_3SO_2)_3$, $LiB(CF_3SO_3)_4$, $LiB(C_2O_4)_2$, $LiBF_2(C_2O_4)$, $LiSbF_6$, $LiSiF_5$, LiSCN, $LiClO_4$, LiCl, LiF, LiBr, LiI, $LiAlF_4$, $LiAlCl_4$, $LiPO_2F_2$, and derivatives thereof. Of those, one or more kinds selected from the group consisting of $LiPF_6$, $LiBF_4$, $LiClO_4$, $LiAsF_6$, $LiCF_3SO_3$, $LiN(CF_3SO_2)_2$, $LiN(C_2F_5SO_2)_2$, $LiN(SO_2F)_2$, and $LiC(CF_3SO_2)_3$, and derivatives of $LiCF_3SO_3$ and derivatives of $LiC(CF_3SO_2)_3$ are preferably used from the viewpoint that the discharge capacity is further increased.

The content of the supporting electrolyte in the liquid electrolyte or the gel polymer electrolyte is preferably from 0.5 mol/L to 7 mol/L, more preferably from 0.8 mol/L to 1.8 mol/L from the viewpoint that the discharge capacity is further increased.

Examples of the supporting electrolyte to be used in the polymer electrolyte in the case of the lithium ion secondary battery include $LiN(CF_3SO_2)_2$, $LiN(C_2F_5SO_2)_2$, $LiN(SO_2F)_2$, $LiC(CF_3SO_2)_3$, $LiB(CF_3SO_3)_4$, and $LiB(C_2O_4)_2$.

In this disclosure, examples of the inorganic solid electrolyte in the case of the lithium ion secondary battery include: phosphoric acid-based materials, such as $Li_{1+x}A_xB_{2-x}(PO_4)_3$ (A=Al, Ge, Sn, Hf, Zr, Sc, or Y, B=Ti, Ge, or Zn, $0<x<0.5$), $LiMPO_4$ (M=Mn, Fe, Co, or Ni), and $Li_3PO_4$; composite oxides of lithium, such as $Li_3XO_4$ (X=As or V), $Li_{3+x}A_xB_{1-x}O_4$ (A=Si, Ge, or Ti, B=P, As, or V, $0<x<0.6$), $Li_{4+x}A_xSi_{1-x}O_4$ (when A=B, Al, Ga, Cr, or Fe, $0<x<0.4$; when A=Ni or Co, $0<x<0.1$), $Li_{4-3y}Al_ySiO_4$ ($0<y<0.06$), $Li_{4-2y}Zn_yGeO_4$ ($0<y<0.25$), $LiAlO_2$, $Li_2BO_4$, $Li_4XO_4$ (X=Si, Ge, or Ti), and lithium titanate ($LiTiO_2$, $LiTi_2O_4$, $Li_4TiO_4$, $Li_2TiO_3$, $Li_2Ti_3O_7$, or $Li_4Ti_5O_{12}$); compounds each containing lithium and a halogen, such as LiBr, LiF, LiCl, $LiPF_6$, and $LiBF_4$; compounds each containing lithium and nitrogen, such as LiPON, $LiN(SO_2CF_3)_2$, $LiN(SO_2C_2F_5)_2$, $Li_3N$, and $LiN(SO_2C_3F_7)_2$; crystals each having a perovskite structure having lithium ion conductivity, such as $La_{0.55}Li_{0.35}TiO_3$; crystals each having a garnet-type structure, such as $Li_7$-$La_3Zr_2O_{13}$; glasses, such as $50Li_4SiO_4 \cdot 50Li_3BO_{33}$ and $90Li_3BO_3 \cdot 10Li_2SO_4$; lithium-phosphorus sulfide-based crystals, such as $70Li_2S \cdot 30P_2S_5$, $75Li_2S \cdot 25P_2S_5$, $Li_6PS_5Cl$, $Li_{9.54}Si_{1.74}P_{1.44}S_{11.7}Cl_{0.3}$, $Li_6PS_5P_{1.44}Cl_3$, $Li_{10}GeP_2S_{12}$, and $Li_{3.25}Ge_{0.25}P_{0.75}S_4$; lithium-phosphorus sulfide-based glasses, such as $30Li_2S \cdot 26B_2S_3 \cdot 44LiI$, $50Li_2S \cdot 17P_2S_5 \cdot 33LiBH$, $50Li_2S \cdot 50GeS_2$, $63Li_2S \cdot 36SiS_2 \cdot 1Li_3PO_4$, $57Li_2S \cdot 38SiS_2 \cdot 5Li_4SiO_4$, and $70Li_2S \cdot 50GeS_2$; and glass ceramics, such as $Li_7P_3S_{11}$, $Li_{3.25}P_{0.95}S_4$, $Li_{10}GeP_2S_{12}$, $Li_{9.6}P_3S_{12}$, and $Li_{9.54}Si_{1.74}P_{1.44}S_{11.7}Cl_{0.3}$. The inorganic solid electrolyte may be coated with the gel polymer electrolyte. In addition, when the inorganic solid electrolyte is used, a layer of the gel polymer electrolyte may be arranged between a layer of the inorganic solid electrolyte and an electrode.

In the case of the sodium ion secondary battery, the supporting electrolyte in which a lithium atom is replaced with a sodium atom among the above-mentioned supporting electrolytes in the case of the lithium ion secondary battery has

only to be used.

In this disclosure, an organic solvent generally used for a liquid electrolyte may be used as the organic solvent to be used for each of the liquid electrolyte and the gel polymer electrolyte. Specific examples of the organic solvent include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound. Of those, a saturated cyclic carbonate compound, a saturated cyclic ester compound, a sulfoxide compound, a sulfone compound, and an amide compound are preferred, and a saturated cyclic carbonate compound is more preferred from the viewpoints that each of the compounds plays a role in increasing the dielectric constant of the electrolyte by virtue of its high specific dielectric constant, and that the discharge capacity is further increased. In addition, of those, a saturated chain carbonate compound, a chain ether compound, a cyclic ether compound, and a saturated chain ester compound are preferred, and a saturated chain carbonate compound is more preferred from the viewpoint that each of the compounds can reduce the viscosity of the electrolyte and can increase the mobility of an electrolyte ion to make battery characteristics such as an output density excellent.

Examples of the saturated cyclic carbonate compound include ethylene carbonate, fluoroethylene carbonate, 1,2-propylene carbonate, 1,3-propylene carbonate, 1,2-butylene carbonate, 1,3-butylene carbonate, and 1,1-dimethylethylene carbonate.

Examples of the saturated cyclic ester compound include γ-butyrolactone, γ-valerolactone, γ-caprolactone, δ-hexanolactone, and δ-octanolactone.

Examples of the sulfoxide compound include dimethyl sulfoxide, diethyl sulfoxide, dipropyl sulfoxide, diphenyl sulfoxide, and thiophene.

Examples of the sulfone compound include dimethylsulfone, diethylsulfone, dipropylsulfone, diphenylsulfone, sulfolane (also called tetramethylene sulfone), 3-methylsulfolane, 3,4-dimethylsulfolane, 3,4-diphenylmethylsulfolane, sulfolene, 3-methylsulfolene, 3-ethylsulfolene, and 3-bromomethylsulfolene. Of those, sulfolane and tetramethylsulfolane are preferred from the viewpoint that the discharge capacity is further increased.

Examples of the amide compound include N-methylpyrrolidone, dimethylformamide, and dimethylacetamide.

Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate.

Examples of the chain ether compound and the cyclic ether compound include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, diethylene glycol bis(trifluoroethyl) ether, and glymes. Of those, dioxolane is preferred from the viewpoint that the discharge capacity is further increased.

Examples of the saturated chain ester compound include a monoester compound and a diester compound each having a total of 2 to 8 carbon atoms in a molecule thereof. Specific examples of the saturated chain ester compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Of those, methyl formate, ethyl formate, methyl acetate, ethyl acetate, propyl acetate, isobutyl acetate, butyl acetate, methyl propionate, and ethyl propionate are preferred from the viewpoint that the discharge capacity is further increased.

Examples of the other organic solvent that may be used in the preparation of the electrolyte include acetonitrile, propionitrile, nitromethane, derivatives thereof, and various ionic liquids.

Examples of the polymer to be used in the gel polymer electrolyte include polyethylene oxide, polypropylene oxide, polyvinyl chloride, polyacrylonitrile, polymethyl methacrylate, polyethylene, polyvinylidene fluoride, and polyhexafluoropropylene. The blending ratio of the polymer in the gel polymer electrolyte and a gelation method are not particularly limited, and a known blending ratio and a known gelation method in the art have only to be adopted.

Examples of the polymer to be used in the polymer electrolyte include polyethylene oxide, polypropylene oxide, polystyrenesulfonic acid, and polyvinylidene fluoride. The blending ratio of the polymer in the polymer electrolyte and a compositing method are not particularly limited, and a known blending ratio and a known compositing method in the art have only to be adopted.

For example, to prolong the lifetime of the battery and improve the safety thereof, the electrolyte may further contain any other known additive, such as an electrode film forming agent, an antioxidant, a flame retardant, or an overcharge inhibitor. The content of the other additive is generally from 0.01 part by mass to 10 parts by mass, preferably from 0.1 part by mass to 5 parts by mass with respect to 100 parts by mass of the electrolyte from the viewpoint that the discharge capacity is further increased.

(3) Separator

The separator is not particularly limited as long as lithium ions are allowed to permeate therethrough and the contact between the positive electrode and the negative electrode can be prevented, but for example, a microporous polymer film or a non-woven fabric may be used. Examples of the film include films formed of polymer compounds containing, as main components, for example, any of polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyethers, such as polyethylene oxide and polypropylene oxide, various celluloses, such as carboxymethyl cellulose and hydroxypropyl cellulose, and poly(meth)acrylic acid and various esters thereof, derivatives thereof, and copolymers and mixtures thereof. Those films may each be coated with a ceramic material, such as alumina or silica, magnesium oxide, an aramid resin, or polyvinylidene fluoride.

Those films may be used alone or as a multi-layer film in which the films are laminated on each other. Further, various additives may be used in those films, and the kinds and contents thereof are not particularly limited. Of those films, a film formed of polyethylene, polypropylene, polyvinylidene fluoride, or polysulfone is preferred from the viewpoint that the discharge capacity of the secondary battery is further increased.

When the electrolyte is the polymer electrolyte or the inorganic solid electrolyte, the separator may not be incorporated.

(4) Others

In this disclosure, the shape of the battery is not particularly limited, and various shapes, such as a coin shape, a cylindrical shape, a rectangular shape, and a laminate shape, may be adopted.

A laminate film or a metal container may be used as an exterior member for the battery. The thickness of the exterior member is generally 0.5 mm or less, preferably 0.3 mm or less. Examples of the shape of the exterior member include a flat shape (thin shape), a rectangular shape, a cylindrical shape, a coin shape, and a button shape.

A multi-layer film including a metal layer between resin films may be used as the laminate film. The metal layer is preferably aluminum foil or aluminum alloy foil for weight saving. For example, a polymer material, such as polypropylene, polyethylene, nylon, or polyethylene terephthalate, may be used as the resin film. The laminate film may be sealed through thermal fusion and formed into the shape of the exterior member.

The metal container may be formed of, for example, stainless steel, aluminum, or an aluminum alloy. The aluminum alloy is preferably an alloy containing an element, such as magnesium, zinc, or silicon. When the content of a transition metal, such as iron, copper, nickel, or chromium, in aluminum or the aluminum alloy is set to 1 mass% or less, the long-term reliability and heat dissipation property of the battery under a high-temperature environment can be dramatically improved.

3. Battery

The battery of this disclosure may be any one of a primary battery and a secondary battery, but is preferably a secondary battery because the secondary battery is useful as an in-vehicle battery.

E. Others

This disclosure includes the following aspects.

[1] A sulfur-containing material including a sulfur-modified compound,
wherein, in photoelectron spectrum analysis of an S1s orbital of the sulfur-containing material by hard X-ray photoelectron spectroscopy, a ratio (A/B) between a peak intensity area (A) of a peak corresponding to an S-S bond and a peak intensity area (B) of a peak corresponding to a C-S bond, the peaks being observed in waveform separation of a peak of the S1s orbital within a range of 2,460 eV or more and 2,475 eV or less, is 2.5 or more and 4.0 or less ($2.5 \leq A/B \leq 4.0$).

[2] The sulfur-containing material according to Item [1], wherein the sulfur-modified compound is a sulfur-modified acrylic compound.

[3] A sulfur-containing battery material including a sulfur-modified compound,
wherein, in photoelectron spectrum analysis of an S1s orbital of the sulfur-containing battery material by hard X-ray photoelectron spectroscopy, a ratio (A/B) between a peak intensity area (A) of a peak corresponding to an S-S bond and a peak intensity area (B) of a peak corresponding to a C-S bond, the peaks being observed in waveform separation of a peak of the S1s orbital within a range of 2,460 eV or more and 2,475 eV or less, is 2.5 or more and 4.0 or less ($2.5 \leq A/B \leq 4.0$).

[4] The sulfur-containing battery material according to Item [3], wherein the sulfur-modified compound is a sulfur-modified acrylic compound.

[5] An electrode including an electrode layer containing the sulfur-containing material of Item [1] or [2] or the sulfur-containing battery material of Item [3] or [4].

[6] A battery including the electrode of Item [5].

[7] The battery according to Item [6], wherein the electrode is a positive electrode.

[8] The battery according to Item [7], wherein the battery includes a negative electrode formed of lithium.

This disclosure is not limited to the above-mentioned embodiments. The above-mentioned embodiments are illustrative, and any embodiment having substantially the same configuration as that of the technical idea described in Claims and exhibiting an action and effect similar thereto is encompassed in the technical scope of this disclosure.

Examples

This disclosure is described in more detail below by way of Examples and Comparative Example. However, this disclosure is by no means limited to the following Examples and the like. "Part(s)" and "%" in Examples are by mass unless otherwise specified.

[Example 1] Production of Sulfur-containing Material A

A center potion of a glass tube made of heat-resistant glass having an outer diameter of 10 mm and an inner diameter of 6 mm was expanded while being heated. Thus, a volumetric pipette-type core tube made of glass including an expanded portion having an outer diameter of 30 mm and a length of 50 mm in a center portion thereof and thin tubes each having an outer diameter of 10 mm and a length of 150 mm at both ends thereof was produced.

5 g of a raw material PAN mixture obtained by mixing polyacrylonitrile powder (manufactured by Sigma-Aldrich, average particle diameter: 200 μm, weight average molecular weight: about 150,000) and sulfur powder (manufactured by Sigma-Aldrich, average particle diameter: 200 μm) at a weight ratio of 1:3 was loaded into the expanded portion of the core tube, and the core tube was arranged so as to have an inclination of 15°. After the inside of the core tube was replaced with a nitrogen gas, the core tube was heated at 300°C for 15 minutes while being rotated at 3 revolutions per minute. Thus, an intermediate product was obtained. During the heating, a nitrogen gas was fed at a flow rate of 100 ml/min from the lower end of the core tube so that a hydrogen sulfide gas to be generated was able to be discharged from the upper end of the core tube. In addition, while a portion of the core tube to be heated was set to the entirety of the expanded portion, sulfur having sublimated and adhered to a thin tube portion was refluxed to the expanded portion by being appropriately heated to be melted.

The resultant intermediate product was placed in a glass tube oven, and heated at 260°C for 1 hour while being vacuum suctioned, to thereby remove elemental sulfur therefrom. The resultant sulfur-modified compound was pulverized with a ball mill, and coarse particles were then removed therefrom with a sieve having an opening of 40 μm. Thus, a sulfur-containing material A having an average particle diameter of 10 μm was obtained.

The total sulfur content of the sulfur-containing material A was 49 mass%, and the content of the elemental sulfur in the sulfur-containing material A was 0 mass%.

[Example 2] Production of Sulfur-containing Material B

The same operations as in Example 1 were performed except that the elemental sulfur removal conditions for the intermediate product in Example 1 were changed from 260°C for 1 hour to 200°C for 2 hours. Thus, a sulfur-containing material B having an average particle diameter of 10 μm was obtained.

The total sulfur content of the sulfur-containing material B was 49 mass%, and the content of the elemental sulfur in the sulfur-containing material B was 0 mass%.

[Comparative Example 1] Production of Sulfur-containing Material "a"

The same operations as in Example 1 were performed except that the heating conditions in production of the intermediate product in Example 1 were changed from 300°C for 15 minutes to 280°C for 30 minutes. Thus, a sulfur-containing material "a" having an average particle diameter of 10 μm was obtained.

The total sulfur content of the sulfur-containing material "a" was 49 mass%, and the content of the elemental sulfur in the sulfur-containing material "a" was 0 mass%.

[Total Sulfur Content]

The total sulfur content (mass%) of the sulfur-containing material obtained in each of Examples and Comparative Example was calculated from the results of analysis with a CHNS analyzer (manufactured by Elementar Analysensysteme GmbH, model: vario MICRO cube) capable of analyzing sulfur and oxygen. The temperatures of a combustion tube and a reduction tube were set to 1,150°C and 850°C, respectively, and a tin boat was used as a sample container.

[Analysis by Hard X-ray Photoelectron Spectroscopy (HAXPES)]

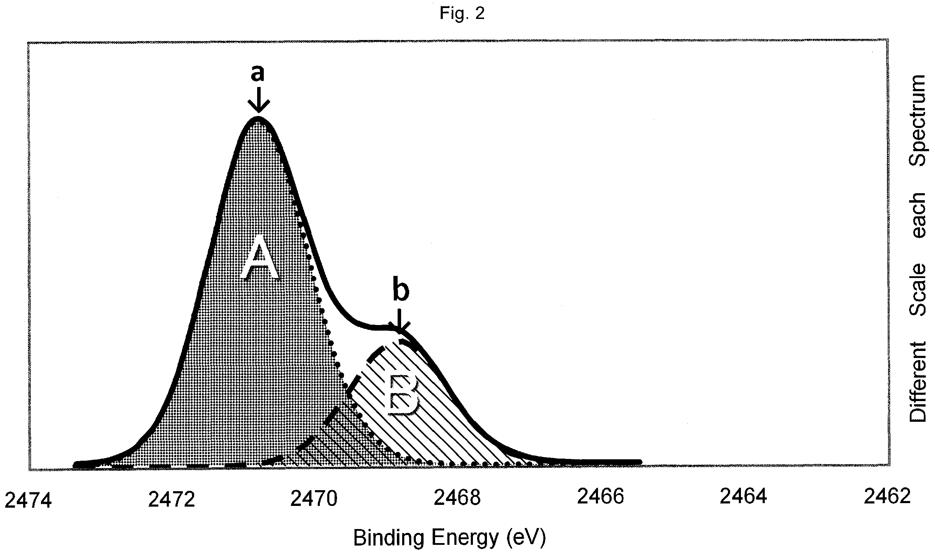

The sulfur-containing material obtained in each of Examples and Comparative Example was subjected to measurement by hard X-ray photoelectron spectroscopy (HAXPES) with a hard X-ray photoelectron spectrometer (manufactured by Scienta Omicron, HAXPES Lab). In addition, waveform separation of a peak of an S1s orbital within the range of 2,460 eV or more and 2,475 eV or less was performed, and a peak intensity area (%) of a peak corresponding to a C-S bond and a peak intensity area (%) of a peak corresponding to an S-S bond, the peaks being observed in the waveform separation of the peak of the S1s orbital within the range of 2,460 eV or more and 2,475 eV or less, were calculated, respectively. Examples of a photoelectron spectrum of the S1s orbital of the sulfur-containing material analyzed by the hard X-ray photoelectron spectroscopy are shown in FIG. 1 (sulfur-containing material A) and FIG. 2 (sulfur-containing material "a"). The measurement conditions of the hard X-ray photoelectron spectroscopy (HAXPES) are as described below.

X-ray source: monochromated Ga K$\alpha$ (9,251.8 eV)
Detection region: about 1 mm$\times$6 mm
Detection depth: to about 50 nm
Measurement spectrum: S1s

The sulfur-containing material obtained in each of Examples and Comparative Example was used to produce a secondary battery.

(1) Preparation of Positive Electrode

90.0 Parts by mass of the sulfur-containing material serving as an active material for a positive electrode active material layer, 5.0 parts by mass of acetylene black (manufactured by Denka Company Limited) serving as a conductive assistant, 3.0 parts by mass of a styrene-butadiene rubber (aqueous dispersion, manufactured by Zeon Corporation) and 2.0 parts by mass of sodium carboxymethyl cellulose (manufactured by Daicel Fine Chem Ltd.) serving as binders, and 120 parts by mass of water serving as a solvent were mixed with a rotation/revolution mixer to prepare a composition for forming an electrode layer.

The composition for forming an electrode layer was applied onto carbon-coated aluminum foil (thickness: 20 $\mu$m) serving as a current collector by a doctor blade method, and was dried at 90°C for 1 hour. After that, the electrode was cut into a predetermined size and subjected to vacuum drying at 130°C for 2 hours to prepare a disc-shaped positive electrode.

(2) Preparation of Negative Electrode

Metal lithium having a thickness of 500 $\mu$m was cut into a predetermined size to prepare a disc-shaped negative electrode.

(3) Preparation of Electrolyte

An electrolyte solution was prepared by dissolving $LiPF_6$ at a concentration of 1.0 mol/L in a mixed solvent formed of 50 vol% of fluoroethylene carbonate and 50 vol% of diethyl carbonate.

(4) Production of Battery

The positive electrode and the negative electrode prepared in advance were held in a case while a glass filter serving as a separator was sandwiched therebetween. After that, the electrolyte solution prepared in advance was injected into the case, and the case was hermetically sealed. Thus, a secondary battery (a coin-shaped battery having a diameter of 20 mm and a thickness of 3.2 mm) was produced. The production procedure of the section "(4) Production of Battery" was performed under an atmosphere having a dew point of -70°C.

(5) Evaluation Method

The secondary battery produced in the foregoing was placed in a constant-temperature bath at 25°C, and was subjected to 100 cycles of charge and discharge at a charge rate of 0.1C and a discharge rate of 0.1C while a charge final voltage and a discharge final voltage were set to 3.0 V and 1.0 V, respectively. Discharge capacities (mAh/g) were measured in the 10th cycle and the 100th cycle. The results of the discharge capacity (mAh/g) in the 10th cycle are shown in Table 1. In this disclosure, the unit "g" in the discharge capacity (mAh/g) refers to the mass of the active material in the positive electrode active material layer.

In addition, a ratio of the discharge capacity in the 100th cycle to the discharge capacity in the 10th cycle was used as a capacity retention rate (%), and a cycle characteristic was evaluated. The results are shown in Table 1.

Table 1

| | Example 1 | Example 2 | Comparative Example 1 |
|---|---|---|---|
| Sample | Sulfur-containing material A | Sulfur-containing material B | Sulfur-containing material "a" |
| Total sulfur content | 49 mass% | 49 mass% | 49 mass% |
| Peak intensity area (A) of peak corresponding to S-S bond | 76.8 | 72.3 | 81.1 |
| Peak intensity area (B) of peak corresponding to C-S bond | 23.2 | 26.7 | 18.9 |
| A/B | 3.31 | 2.71 | 4.29 |
| Discharge capacity in 10th cycle [mAh/g] | 682 | 686 | 663 |
| Capacity retention rate (%) | 100 | 99 | 89 |

From the above-mentioned results, it was found that the battery using the sulfur-containing material of each of Examples had an increased discharge capacity and also an improved capacity retention rate, and hence the battery was excellent in cycle characteristic.

## Claims

1. A sulfur-containing material, comprising a sulfur-modified compound,
   wherein, in photoelectron spectrum analysis of an S1s orbital of the sulfur-containing material by hard X-ray photoelectron spectroscopy, a ratio (A/B) between a peak intensity area (A) of a peak corresponding to an S-S bond and a peak intensity area (B) of a peak corresponding to a C-S bond, the peaks being observed in waveform separation of a peak of the S1s orbital within a range of 2,460 eV or more and 2,475 eV or less, is 2.5 or more and 4.0 or less ($2.5 \leq A/B \leq 4.0$).

2. The sulfur-containing material according to claim 1, wherein the sulfur-modified compound is a sulfur-modified acrylic compound.

3. A sulfur-containing battery material, comprising a sulfur-modified compound,
   wherein, in photoelectron spectrum analysis of an S1s orbital of the sulfur-containing battery material by hard X-ray photoelectron spectroscopy, a ratio (A/B) between a peak intensity area (A) of a peak corresponding to an S-S bond and a peak intensity area (B) of a peak corresponding to a C-S bond, the peaks being observed in waveform separation of a peak of the S1s orbital within a range of 2,460 eV or more and 2,475 eV or less, is 2.5 or more and 4.0 or less ($2.5 \leq A/B \leq 4.0$).

4. The sulfur-containing battery material according to claim 3, wherein the sulfur-modified compound is a sulfur-modified acrylic compound.

**5.** An electrode, comprising an electrode layer containing the sulfur-containing material of claim 1.

**6.** A battery, comprising the electrode of claim 5.

**7.** The battery according to claim 6, wherein the electrode is a positive electrode.

**8.** The battery according to claim 7, wherein the battery comprises a negative electrode formed of lithium.

Different Scale each Spectrum
Binding Energy (eV)
2474
2472
2470
2468
2466
2464
2462
a
b
A
B

Fig. 1

Different Scale each Spectrum
a
b
A
B
2474
2472
2470
2468
2466
2464
2462
Binding Energy (eV)

Fig. 2

## INTERNATIONAL SEARCH REPORT

International application No. **PCT/JP2024/033289**

**A. CLASSIFICATION OF SUBJECT MATTER**

***C08F 8/34***(2006.01)i; ***H01M 4/38***(2006.01)i; ***H01M 4/58***(2010.01)i; ***H01M 4/60***(2006.01)i; ***H01M 10/052***(2010.01)i
FI: C08F8/34; H01M4/58; H01M4/60; H01M4/38 Z; H01M10/052

According to International Patent Classification (IPC) or to both national classification and IPC

**B. FIELDS SEARCHED**

Minimum documentation searched (classification system followed by classification symbols)

C08F8/34; H01M4/38; H01M4/58; H01M4/60; H01M10/052

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2012/098614 A1 (KABUSHIKI KAISHA TOYOTA JIDOSHOKKI) 26 July 2012 (2012-07-26) entire text, in particular, examples | 1-8 |
| A | JP 2010-153296 A (NATIONAL INSTITUTE OF ADVANCED INDUSTRIAL SCIENCE AND TECHNOLOGY) 08 July 2010 (2010-07-08) entire text, in particular, examples | 1-8 |
| A | JP 2013-191331 A (KABUSHIKI KAISHA TOYOTA JIDOSHOKKI) 26 September 2013 (2013-09-26) entire text, in particular, examples | 1-8 |
| A | JP 2013-191330 A (KABUSHIKI KAISHA TOYOTA JIDOSHOKKI) 26 September 2013 (2013-09-26) entire text, in particular, examples | 1-8 |
| A | JP 2020-080301 A (DAI ICHI KOGYO SEIYAKU CO., LTD.) 28 May 2020 (2020-05-28) entire text, in particular, examples | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/033289**

**C. DOCUMENTS CONSIDERED TO BE RELEVANT**

| Category* | Citation of document, with indication, where appropriate, of the relevant passages | Relevant to claim No. |
|---|---|---|
| A | JP 2013-037960 A (KABUSHIKI KAISHA TOYOTA JIDOSHOKKI) 21 February 2013 (2013-02-21) entire text, in particular, examples | 1-8 |
| A | WO 2012/060037 A1 (KABUSHIKI KAISHA TOYOTA JIDOSHOKKI) 10 May 2012 (2012-05-10) claims, in particular, example 2 | 1-8 |

Form PCT/ISA/210 (second sheet) (July 2022)

**INTERNATIONAL SEARCH REPORT**
**Information on patent family members**

International application No.
**PCT/JP2024/033289**

| Patent document cited in search report | Publication date (day/month/year) | Patent family member(s) | Publication date (day/month/year) |
|---|---|---|---|
| WO 2012/098614 A1 | 26 July 2012 | JP 2012-150948 A | |
| JP 2010-153296 A | 08 July 2010 | (Family: none) | |
| JP 2013-191331 A | 26 September 2013 | (Family: none) | |
| JP 2013-191330 A | 26 September 2013 | (Family: none) | |
| JP 2020-080301 A | 28 May 2020 | WO 2020/071298 A1<br>entire text, in particular, examples<br>CN 112673498 A<br>KR 10-2021-0062628 A<br>TW 202030912 A | |
| JP 2013-037960 A | 21 February 2013 | (Family: none) | |
| WO 2012/060037 A1 | 10 May 2012 | TW 201226316 A<br>JP 2012-099342 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010044437 A1
- JP 2014022123 A
- JP 2022065974 A

### Non-patent literature cited in the description

- **NAOYA AMINO**. Applications of Hard X-ray Photoelectron Spectroscopy (HAXPES) to Rubber Materials Developments. *Nippon Gomu Kyokaishi*, 2019, vol. 92 (2), 76-81